# EUROPEAN PATENT APPLICATION

(11) **EP 0 744 555 A1**
(43) Date of publication of application: **27.11.1996**
(21) Application number: 96107020.8
(22) Date of filing: 03.05.1996
(51) Int. Cl.: F16B 11/00, F16B 37/04

(54) **Adhesive mounted nutplate assembly**

(30) Priority: 26.05.1995 US 451925
(71) Applicant: PHYSICAL SYSTEMS INC., Carson City Nevada 89702 (US)
(72) Inventor: Hutter III, Charles C., Carson City, Nevada 89703 (US)
(74) Representative: Ruschke, Hans Edvard, Dipl.-Ing., Patentanwälte

(57) **Abstract**

An improved adhesive mounted nutplate assembly is provided for secure mounting onto the blind side of a substrate, such as a floor rail or the like in an aircraft, with a nutplate in general alignment with an access opening formed through the substrate. The nutplate assembly comprises a housing defining a bonding surface for adhesive mounting onto the blind side of the substrate. The housing carries the nutplate in general alignment with the substrate access opening, with a spring biasing the nutplate toward the substrate. The nutplate assembly is particularly suited for mounting by use of a fixture pin of the type described in U.S. Patent 5,013,391. In use, the spring accommodates retraction of the nutplate from the substrate upon initial engagement with a fastener screw passed through access opening, without risk of disbonding of the nutplate housing from the substrate.

## Description

### BACKGROUND OF THE INVENTION

This invention relates generally to adhesive attachment assemblies and related mounting fixtures for securely installing an adhesive attachment onto a supporting surface or substrate. More specifically, this invention relates to an improved adhesive mounted nutplate assembly for secure mounting onto the blind side of a substrate, wherein the nutplate assembly includes a spring-loaded nut element.

In many manufacturing environments, it is necessary or desirable to install a nut or nut element onto the blind side of a supporting substrate. As one example, nutplates are well-known in the automotive and aerospace industries for use in mounting a threaded nut onto the blind side of a substrate, typically in general alignment with an access opening formed through the substrate, to accommodate subsequent reception of a threaded fastener such as a screw or bolt. Such nutplates typically include a floating or fixed nut carried by a base which is fastened to the substrate by one or more rivets extending through rivet ports formed in the substrate adjacent the access opening. Alternately, adhesive mounting techniques have been proposed for adhesively bonding the nutplate base onto the blind side of the substrate, thereby avoiding the need to form additional rivet ports in the substrate. For optimum bond strength, such adhesive mounting techniques require the nutplate base to be pressed against the substrate with a positive force during curing of the adhesive material. U.S. Patent 5,013,391 describes a convenient fixture pin for supporting the nutplate base with the desired positive force during the adhesive cure time, wherein the fixture pin is subsequently removed from the front side of the substrate, without requiring further access to the substrate blind side.

In some blind side adhesive mounted fastener applications, disbonding or separation of the nutplate base from the substrate can sometimes occur upon initial force-fit engagement of the threaded fastener with the blind side nutplate. As one example, lightweight floor panels of the type used in aircraft are commonly fastened onto a supporting frame or substrate by a plurality of screws passed downwardly through aligned access openings formed in the floor panel and substrate, for threaded reception into nut elements mounted on the underside or blind side of the substrate. These threaded fasteners are commonly pressed downwardly through the access openings by manufacturing or maintenance service personnel to engage the blind side nut element with a substantial downward force prior to initiating fastener rotation, typically with a power tool, for threaded reception into said nut element. In some cases, the downward force applied to the fastener can be sufficient to disbond the entire nutplate assembly from the substrate. Subsequent remounting of a new nutplate assembly onto the blind side of the substrate can be extremely difficult.

There exists, therefore, a need for improvements in adhesive mounted nutplate assemblies, particularly with respect to providing an adhesive mounted nutplate assembly having a nut element adapted for force-fit engagement with a threaded fastener, substantially without risk of disbonding of the nutplate assembly from the blind side of the associated substrate. The present invention fulfils these needs and provided further related advantages.

### SUMMARY OF THE INVENTION

In accordance with the invention, an improved adhesive mounted nutplate assembly is provided for quick and easy installation as an adhesive attachment onto the blind side surface of a supporting substrate. The nutplate assembly is particularly suited for installation by means of a removable fixture pin of the type described and claimed in U.S. Patent 5,013,391, which is incorporated by reference herein. The nutplate assembly includes a spring-loaded nut element which may undergo substantial displacement upon initial force-fitted engagement with a threaded fastener to prevent undesirable disbonding of the nutplate assembly from the substrate.

The nutplate assembly comprises a housing having a generally cup-shaped geometry of noncircular cross section and defining a bonding surface for adhesive mounted attachment to the blind side of a substrate. The nut element comprises an internally threaded nutplate and is carried within the housing in general alignment with an access opening formed through the substrate, when the nutplate assembly is mounted onto the substrate. A spring reacts between the housing and the nutplate to bias or urge said nutplate in a direction toward the substrate. The nutplate includes at least one outwardly radiating wing which cooperates with the noncircular cross sectional shape of the housing to prevent rotation of the nutplate within said housing.

The adhesive mounted nutplate assembly, as described, is preferably installed onto the blind side of a substrate by means of a fixture pin of the type described in U.S. Patent 5,013,391. The fixture pin extends through the nutplate and is adapted to support the nutplate assembly with a positive force against the blind side of the substrate, during the cure period of an adhesive material interposed between the housing bonding surface and the substrate. When the adhesive material is cured, the fixture pin is removed from the nutplate assembly by grasping the fixture pin at the front or accessible side of the substrate and forcibly pulling the fixture pin from the nutplate.

Subsequent engagement of the nutplate with a threaded fastener passed through the substrate access opening, from the front side of the substrate, is accompanied by spring-resisted longitudinal displacement of the nutplate in a direction away from the substrate. The spring force applied to the nutplate during this step is chosen to be substantially less than the bonding force between the housing and the substrate, such that there is little or no risk of disbonding of the housing from the substrate. Accordingly, the fastener can be fitted through the substrate access opening until the fastener head is bottomed against the associated surface, at which time the fastener can be rotated manually or with a power tool to draw the nutplate tightly onto the fastener. As noted above, relative rotation of the nutplate within the housing is prevented, such that fastener rotation draws the nutplate tightly onto the fastener. In this regard, the length of the fastener, when the head is seated or bottomed as described above, is selected to prevent bottoming of the biasing spring against the housing, whereby the engagement force of the fastener with the nutplate, in excess of the spring force, is not transmitted to the housing.

Other features and advantages of the invention will become more apparent from the following detailed description, taken in conjunction with the accompanying drawings which illustrate, by way of example, the principles of the invention.

### BRIEF DESCRIPTION OF THE DRAWINGS

The accompanying drawings illustrate the invention. In such drawings:
FIGURE 1 is a perspective view illustrating an adhesive mounted nutplate assembly embodying the novel features of the invention;
FIGURE 2 is an exploded perspective view illustrating construction details of the nutplate assembly of FIG. 1;
FIGURE 3 is a perspective view illustrating application of an adhesive material onto a bonding surface of the nutplate assembly;
FIGURE 4 is a fragmented vertical sectional view depicting adhesive mounting of the nutplate assembly onto the blind side of a substrate;
FIGURE 5 is a fragmented sectional view similar to FIG. 4, but depicting removal of a fixture pin from the adhesive mounted nutplate assembly;
FIGURE 6 is a fragmented sectional view similar to FIG. 5, and showing initial engagement of the nutplate assembly by a threaded fastener;
FIGURE 7 is a fragmented sectional view similar to FIG. 6, and showing force-fitted engagement of the threaded fastener with the nutplate assembly; and
FIGURE 8 is a fragmented sectional view similar to FIGS. 6 and 7, and showing the fastener in threaded engagement with the nutplate assembly.

### DETAILED DESCRIPTION OF THE PREFERRED EMBODIMENT

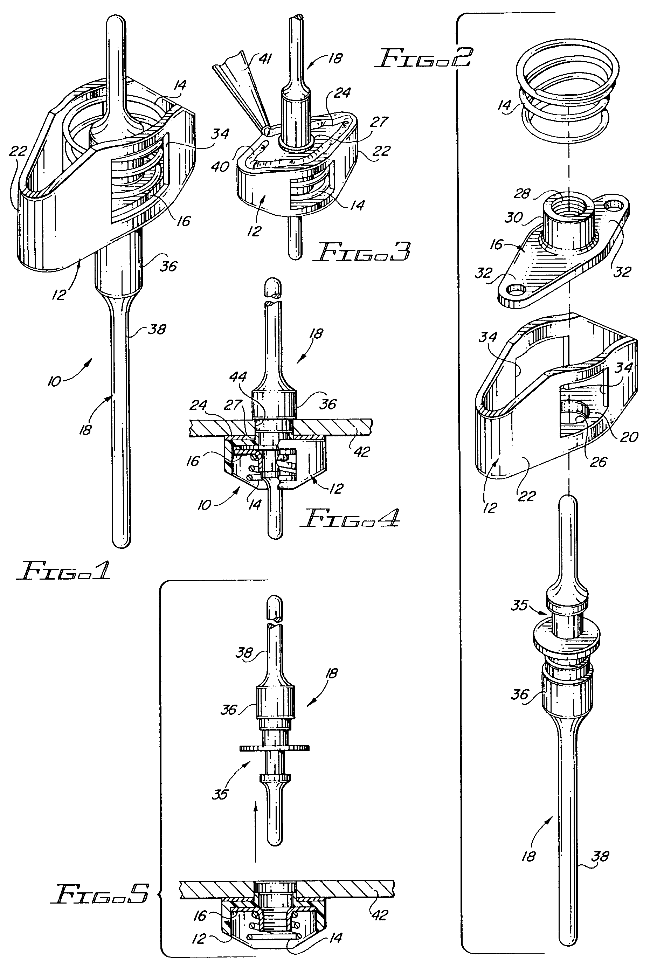

As shown in the exemplary drawings, an improved adhesive mounted nutplate assembly, referred to generally by the reference numeral 10, is provided for secure adhesive mounting onto the blind side of a supporting surface or substrate. The nutplate assembly 10 comprise a housing 12 for adhesive mounting onto the blind side of the substrate, in combination with a spring 14 for controllably biasing or urging an internally threaded nutplate 16 in a direction toward the associated substrate. FIGS. 1-5 show an elongated resilient fixture pin 18 of the type described in U.S. Patent 5,013,391, for use in adhesively mounting the nutplate assembly onto a substrate.

The adhesive mounted nutplate assembly 10 of the present invention is particularly designed as an improvement upon prior adhesive mounted nutplate assemblies as described in U.S. Patent 5,013,391, which is incorporated by reference herein. At the same time, the improved adhesive mounted nutplate assembly 10 is conveniently and securely mounted onto a substrate by means of the fixture pin 18 as described in U.S. Patent 5,013,391. The spring 14 movably supports the nutplate 16 so that said nutplate is capable of undergoing substantial longitudinal displacement upon initial engagement with a threaded fastener, as will be described in more detail, to prevent undesired disbonding or separation of the nutplate assembly from the substrate. In this regard, the nutplate assembly 10 of the present invention is particularly adapted for use in combination with lightweight floor panels of the type used in aircraft, although a range of other applications will be apparent to persons skilled in the art.

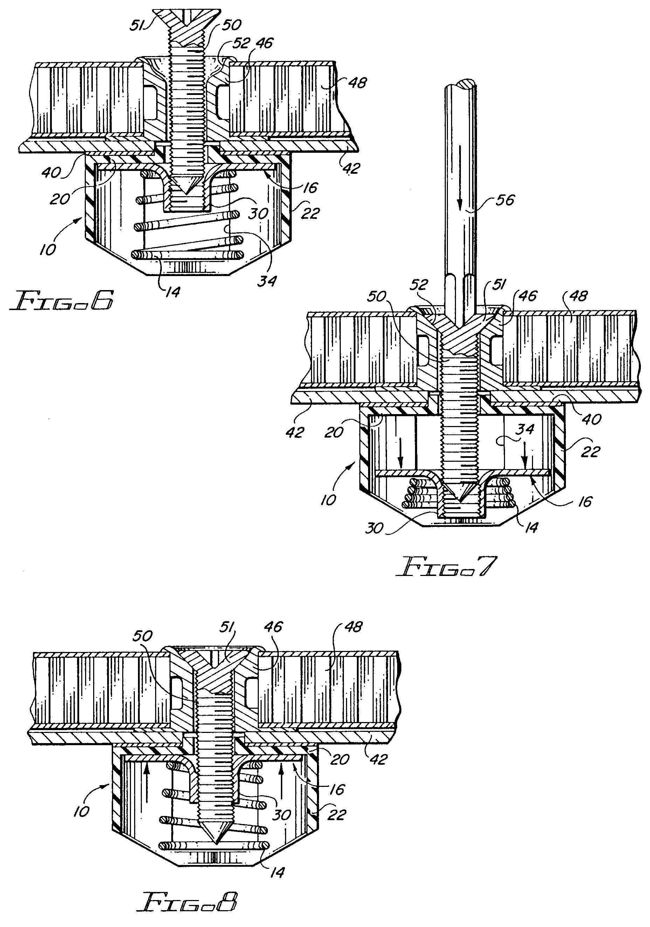

As shown in FIGS. 1 and 2 in accordance with one preferred form of the invention, the base or housing 12 has a generally cup-shaped geometry of noncircular cross section to define a base 20 joined to an upstanding side wall 22. The underside surface 24 (FIG. 3) on the base 20, disposed opposite the side wall 22, defines a bonding surface for adhesive bonded attachment to the substrate, as will be described. A central port 26 is formed in the base, and this port 26 is lined by a relatively short cylindrical hub 27 (FIG. 3) which protrudes in a direction opposite to the side wall 22.

The nutplate 16 has an internally threaded bore 28 defined within a central cylindrical segment 30 which is joined to a pair of outwardly radiating wings 32. These wings 32 have a size and shape for supporting the nutplate 16 within the housing 12, with said wings 32 cooperating with the side wall 22 to prevent nutplate rotation within the housing relative to an axis of the threaded bore 30. The spring 14 is shown in the form of a compression coil of truncated conical geometry spring which reacts between the housing 12 and the wings 32 of the nutplate 16 for spring-seating the nutplate against the housing base 20. In this regard, cut-outs or openings 34 in the side wall 22 of the housing conveniently define stop surfaces against which one end of the spring 14 can react.

The nutplate assembly 10, as described, is conveniently and desirably preassembled with the fixture pin 18 of the type shown and claimed in U.S. Patent 5,013,391. This fixture pin has an elongated construction with a neck portion 35 defining a series of stop shoulders and sized to fit snugly within the threaded bore 30 of the nutplate 16. This neck portion 35 is joined to a diametrically enlarged fixture body 36 at one end of the nutplate assembly, and this fixture body 36 is in turn joined to a smaller diameter tail 38.

In use, as depicted in FIGS. 3 and 4, a selected adhesive material 40 is applied to the bonding surface 24 of the housing 12 by a suitable applicator 41. The nutplate assembly is then installed onto the blind side of a substrate 42, as shown in FIG. 4, by means of the fixture pin 18. The shouldered neck portion 35 of the fixture pin is bindingly retained within the nutplate bore 30, whereas the tail 38 and the enlarged main body 36 are pulled through an access opening 44 in the substrate 42. The fixture body 36 is bindingly retained within the access opening 44 in the substrate 42 to apply a positive force pulling the housing 12 against the blind side of the substrate 42 until the adhesive material 40 cures fully. Desirably, a radially enlarged flange or gasket is provided as part of the neck portion 35 and is initially seated between the nutplate 16 and the base 20 to prevent ingress of the adhesive material 40 between those structures. As shown in FIG. 5, after such cure is achieved, the tail 38 of the fixture pin 18 is pulled from the front or accessible side of the substrate structure to remove the entire fixture pin 18 from the nutplate assembly.

FIGS. 6-8 illustrate engagement of the nutplate 16 with a threaded fastener 50 to connect a panel structure 48 to the substrate 42. More particularly, in one exemplary embodiment of use, the substrate 42 comprises a floor rail or the like in an aircraft, and the panel structure 48 comprises a lightweight floor panel having an access opening 47 therein for mounted reception of a cylindrical insert 46. This floor panel 48 is shown with a typical honeycomb core construction. The threaded fastener 50 is passed through the access openings from the front side of the substrate 42 and related floor panel 48. In this regard, the fastener 50 is shown to have a Phillips-type head 51 for substantially flush-seated or flush-mounted reception into a mating cavity 52 formed in the insert 46. In a typical installation procedure, as viewed in FIG. 7, the installer will engage the fastener head 51 with a manual or power-driven tool 56 and push downwardly on the fastener 50 until the head 51 seats within the insert cavity 52. When such seating occurs, the installer then rotates the fastener 50 to advance the threaded fastener into the threaded bore 30 of the nutplate 16.

In accordance with a primary aspect of the invention, the spring-loaded nutplate 16 movably responds to such initial force-fit engagement by a leading end of the fastener 50. That is, the nutplate 16 moves away from the substrate 42 with corresponding compression of the spring 14 until the fastener head 51 is seated within the insert cavity 52, and fastener rotation is initiated. The length of the fastener 50 is chosen to prevent full bottoming of the spring 14 when the fastener head 51 reaches the seated position shown in FIG. 7. Accordingly, during force-fit fastener engagement with the nutplate 16, the only force applied to the bonding interface is the spring force, wherein this spring force is chosen to be less than the bonding force holding the housing 12 to the substrate 42. Risk of disbonding of the housing 12 from the substrate 42 is thus substantially eliminated. Subsequent rotation of the fastener 50 then draws the nutplate onto the fastener until a tight engagement is achieved, as depicted in FIG. 8. Importantly, the relative shapes of the nutplate and the housing 12 preclude rotation of the nutplate during this fastening step.

Subsequent fastener removal may be accomplished in a similar manner, by engaging the tool 56 with the fastener head 51, while rotating the fastener 50 with the head 51 force-seated within the insert cavity 52. During such removal step, the nutplate 16 is advanced off the end of the threaded fastener, while moving away from the substrate 42 and compressing the spring 14. However, the length of the fastener is insufficient to bottom out the spring, whereby the force applied to the bonding interface is once again limited to the spring force reacting between the housing 12 and the nutplate 16.

The present invention thus provides an improved adhesive mounted nutplate assembly particularly suited for blind side and force-fitted engagement by a fastener, without significant risk of separating the adhesive mounted nutplate assembly from the associated substrate. The nutplate is cooperatively supported by the housing and the spring for reciprocal movement back-and-forth in a direction toward and away from the base 20, through a stroke length that accommodates bottom-out seating of the fastener head 51 in the cavity 52 without bottoming out of the spring 14. Thus fasteners can be installed on initial assembly and subsequently as may be required for periodic maintenance service, without concern for disbonding of the nutplate assembly from the substrate. The fasteners can be installed and/or removed quickly and easily, in a relatively rough or force-fit manner, since the installer simply bottoms out the fastener head 51 against the insert 46 before initiating fastener rotation, without concern for possible nutplate assembly disbonding.

A variety of further modifications and improvements to the improved adhesive mounted nutplate assembly of the present invention will be apparent to those skilled in the art. Accordingly, no limitation on the invention is intended by way of the foregoing description and accompanying drawings, except as set forth in the appended claims.

## Claims

1. A nutplate assembly for adhesive mounting onto a substrate having an access opening formed therein, said nutplate assembly comprising:
a housing having an underside surface for adhesive mounting of said housing onto the substrate;
a nutplate movably carried by said housing and defining a threaded bore disposed generally in alignment with the substrate access opening when said housing is mounted onto the substrate; and
retaining means reacting between said housing and said nutplate for biasing said nutplate in a direction toward the substrate when said housing is mounted onto the substrate.

2. The nutplate assembly of claim 1 further including a fixture pin having a neck portion extending through said threaded bore in said nutplate, a diametrically enlarged main body at one end of said neck portion for reception into the substrate access opening when said housing is mounted onto the substrate, and an elongated tail extending from said main body at an end thereof opposite to said neck portion, said main body having a size and shape for binding retention within the access opening.

3. The nutplate assembly of claim 1 wherein said housing comprises a generally cup-shaped element having a base with an open port formed therein, and an upstanding side wall joined to said base, said base defining said underside surface disposed opposite to said side wall.

4. The nutplate assembly of claim 3 wherein said base further defines a generally cylindrical hub lining said open port and extending in a direction for reception into the substrate access opening when said housing is mounted onto the substrate.

5. The nutplate assembly of claim 3 wherein said cup-shaped element has a generally noncircular cross sectional shape, said nutplate being slidably received within said cup-shaped element and defining a generally complementary noncircular cross sectional shape whereby said cup-shaped element engages said nutplate to prevent rotation thereof relative to an axis of said threaded bore.

6. The nutplate assembly of claim 5 wherein said nutplate includes an internal threaded cylindrical segment defining said threaded bore, and at least one radially outwardly extending wing engageable with said side wall to prevent rotation of said nutplate within said housing.

7. The nutplate assembly of claim 3 wherein said housing side wall defines at least one stop surface, said retaining means comprising a compression spring reacting between said stop surface and said nutplate for biasing said nutplate toward normal seated engagement with said base.

8. The nutplate assembly of claim 7 wherein said compression spring comprises a coil opening having a truncated conical geometry.

9. The nutplate assembly of claim 3 wherein said housing and said retaining means cooperatively support said nutplate for movement reciprocally toward and away from said base.

10. The nutplate assembly of claim 9 wherein said side wall has a pair of generally oppositely positioned cut-outs formed therein to define a pair of stop surfaces presented generally toward said base, said retaining means comprising a coil spring reacting between said stop surfaces and said nutplate to bias said nutplate toward normal seated engagement with said base.

11. The nutplate assembly of claim 1 wherein said nutplate is movably carried on said housing for movement reciprocally toward and away from the substrate structure when said housing is mounted onto the substrate structure, whereby a leading end of a fastener engages said nutplate and moves said nutplate in a direction away from the substrate structure upon reception of the fastener through the access opening, said nutplate being movable relative to said housing through a stroke length that is at least slightly greater than the distance said nutplate is moved by the fastener so that the fastener head can bear against the substrate structure.
